# EUROPEAN PATENT SPECIFICATION

(11) **EP 3 216 084 B1**
(45) Date of publication and mention of the grant of the patent: **09.03.2022**
(21) Application number: 16737044.4
(22) Date of filing: 07.01.2016
(51) Int. Cl.: H04B 1/3827, G02C 11/00, H04W 4/029, G06F 1/16, G02B 27/01, H04W 4/80

(54) **MULTI-BAND ANTENNA FOR WEARABLE GLASSES**
MEHRBANDANTENNE FÜR WEARABLE-BRILLE
ANTENNE MULTIBANDE DESTINÉE À DES LUNETTES POUVANT ÊTRE PORTÉES

(30) Priority: 12.01.2015 US 201514594941
(43) Date of publication of application: 13.09.2017
(73) Proprietor: Huawei Technologies Co., Ltd., Longgang District Shenzhen, Guangdong 518129 (CN)
(72) Inventor: LIU, Hongwei, Shenzhen, Guangdong 518129 (CN); TOH, Wee Kian, San Diego, California 92128 (US); SHI, Ping, San Diego, California 92129 (US)
(74) Representative: Pfenning, Meinig & Partner mbB
(86) International application number: PCT/CN2016/070328
(87) International publication number: WO 2016/112818

(56) References cited:
- EP-A1- 2 775 627
- WO-A1-2008/027705
- CN-A- 102 866 506
- CN-A- 102 866 506
- CN-A- 103 168 390
- CN-A- 103 563 174
- CN-A- 103 858 275
- US-A1- 2001 009 410
- US-A1- 2006 052 146
- US-A1- 2013 194 141
- US-A1- 2013 346 168
- US-B1- 8 744 113
- US-B1- 8 744 113

## Description

### TECHNICAL FIELD

The present invention relates generally to systems and methods for wearable eyeglass displays, and, in particular embodiments, to systems and methods for providing multiple wireless communications antennas with improved antenna isolation.

### BACKGROUND

Industrial design of modern wireless devices is evolving towards lower profile devices, and integrating those devices into nontraditional communications devices. These modern wireless devices include cellular phones and tablets, while nontraditional communications devices may be wearables such as watches, eyeglasses and virtual reality headsets or the like. Wireless devices require multiple multi-band radio frequency (RF) antennas to operate on, or near, users. Typical antennas include main cellular antennas, diversity antennas, wireless networking (e.g., WiFi, 802.11, Bluetooth) antennas, near field antennas (e.g., NFC, wireless charging) and global positioning (e.g., GPS) antennas. Multiple multi-band antennas should be co-designed to cooperate with each other and with other electromagnetic components such as speakers, LCD screens, batteries, sensors, etc. However, antennas in proximity to each other result in low isolation, reduced efficiency and increased channel interference. In some devices, separate antennas are used for communicating on WiFi and cellular RF bands. Additionally, some cellular antenna systems include multiple antennas that communicate on the same bands or frequencies, with active antenna switches changing between the antennas when one of antennas is obstructed by the user, for example, by the user's hand position on the device. The performance of the cellular antenna becomes increasingly important as it is frequently located next to other antennas such as WiFi & GPS combination antennas. The proximity of the cellular antennas becomes increasingly critical as the size of devices is shrunk, since the increasingly smaller devices afford less room for the antennas.

WO 2008027705A1 discloses an invention that generally relates to antennas, and more specifically, to an apparatus for reducing electromagnetic signal fading in antennas. It discloses an apparatus that includes a first eyeglass frame section. Further, the apparatus includes a first antenna embedded in the first eyeglass frame section. Furthermore, the apparatus includes a second eyeglass frame section. Moreover, the apparatus includes a second antenna embedded in the second eyeglass frame section.

US 2013194141A1 discloses an invention that relates to eyeglasses type wireless communication device. It discloses an eyeglasses-type wireless communications device that includes: left and right eyepiece sections; pads; endpieces; temples; and an antenna element for carrying out wireless communications, and the antenna element is disposed in a region along an outer edge(s) of the right eyepiece section and/or the left eyepiece section, the region including corresponding one(s) of the endpieces but excluding connecting parts of the eyepiece sections which parts are connected to the respectively corresponding pads.

US 2013346168A1 discloses an augmented reality eyeglass communication device and a method for facilitating shopping using an augmented reality eyeglass communication device. The augmented reality eyeglass communication device may comprise a frame, and a right earpiece and a left earpiece connected to the frame. Furthermore, the eyeglass communication device may comprise a processor configured to receive one or more commands of a user, perform operations associated with the commands of the user, receive product information, and process the product information. The eyeglass communication device may comprise a display connected to the frame and configured to display data received from the processor. In addition to that, the eyeglass communication device may comprise a transceiver electrically connected to the processor and configured to receive and transmit data over a wireless network. The eyeglass communication device may comprise a Subscriber Identification Module card slot, a camera, an earphone, a microphone, and a charging unit.

EP 2775627A1 discloses a glasses type radio communication device. The glasses-type radio communication device is to be worn on the head of a user and includes: left and right eyepiece parts, temples, an antenna for carrying out a radio communication, hinges each provided for folding each of the temples towards a corresponding one of the eyepiece parts, while one of the temples being folded towards a corresponding one of the eyepiece parts, the temple having a shape in which the temple curves so as to be away from the antenna provided in an outer edge region along an outer edge of the eyepiece part.

CN102866506 discloses augmented reality eyeglasses comprising a UMTS/GSM antenna and a Wi-Fi/ Bluetooth/GPS antenna.

### SUMMARY

An embodiment eyeglass display includes a processor disposed in a system enclosure and a display system connected to the processor and configured to display data to a user via a display screen and/or projector in an eye region. A first antenna is disposed in the system enclosure and operably connected to the processor. The processor is configured to cause the first antenna to transmit on a first radio frequency (RF) band. A second antenna is disposed outside the system enclosure and operably connected to the processor, and the processor is configured to cause the second antenna to transmit on a second RF band. A cellular transceiver is disposed outside of the system enclosure and connected to a main cellular antenna by a first feed point and connected to a second cellular antenna by a second feed point, wherein a switch is disposed between the cellular transceiver and the cellular antennas and configured to switch the communication of the cellular transceiver between the cellular antennas based on a command from the processor. The second antenna is the main cellular antenna or the second cellular antenna.

The second antenna extends laterally along a first edge of the at least one eye region and the first edge is an upper eyewire. The second antenna comprises two portions, a feed point is disposed between the two portions of the second antenna. The feed point is disposed in the upper eyewire and connected to asymmetrical portions.

An embodiment method includes providing a user interface by an eyeglass display device and on a display screen disposed in an eye region of the eyeglass display device. The eyeglass display device has a processor and a first antenna disposed in a system enclosure, with a second antenna disposed outside of the system enclosure and extending laterally along a first edge of the at least one eye region and the first edge is an upper eyewire. The second antenna comprises two portions, a feed point is disposed between the two portions of the second antenna. The feed point is disposed in the upper eyewire and connected to asymmetrical portions. The first antenna is configured to communicate in a first radio frequency (RF) band, and the second antenna is configured to communicate in a second RF band. A cellular transceiver is disposed outside of the system enclosure and connected to a main cellular antenna by a first feed point and connected to a second cellular antenna by a second feed point, wherein a switch is disposed between the cellular transceiver and the cellular antennas and configured to switch the communication of the cellular transceiver between the cellular antennas based on a command from the processor. The second antenna is the main cellular antenna or the second cellular antenna. The method further includes performing at least part of a first communication using the first antenna in response to first commands from the processor and performing at least part of a second communication using the second antenna in response to second commands from the processor.

### BRIEF DESCRIPTION OF THE DRAWINGS

For a more complete understanding of the present invention, and the advantages thereof, reference is now made to the following descriptions taken in conjunction with the accompanying drawings, in which:
Fig. 1 is a block diagram illustrating components of an eyeglass display according to some embodiments;
Fig. 2 is a diagram illustrating the eyeglass display 100 according to some embodiments;
Figs. 3A through 3C are cross-sectional diagrams illustrating various arrangements of cellular antennas in upper eyewires and a bridge of the eyeglass display 100 according to some embodiments;
Figs. 4A through 4B are cross-sectional diagrams illustrating various arrangements of cellular antennas in the upper eyewires, bridge and lower eyewires of the eyeglass display according to some embodiments; and
Figs. 5A through 5E are cross-sectional diagrams illustrating various arrangements of cellular antennas in the eyeglass display according to some embodiments.

### DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention. Additionally, the methods and apparatuses described may be applied to wireless communications system antenna layout and design, but are not specifically limited to the same.

Modern communications devices provide the ability to communicate on multiple distinct channels in different frequency bands simultaneously, providing increased data throughput and multiple simultaneous wireless communications services in a single device. Many wireless communications devices are designed to be multi-band devices, with the ability to communicate on different cellular frequency bands, such as the 700 MHz-900 MHz bands, 1700 MHz, 1900 MHZ, 2100 MHz and 2500 MHz bands. Additionally, wireless devices frequently have additional features such as WiFi connectivity on, for example, the 2.4 GHz, 3.6 GHz, 5 GHz bands, or the like, and GPS on the 1227 MHz and 1575 MHz frequencies. The ability to communicate on different frequencies or bands can be provided by multi-band antennas. For example, in some devices, cellular service is provided by an antenna or set of antennas that is configured to communicate on two or more of the different cellular frequency bands, and supplemental services are provided by a WiFi/GPS antenna that is configured to communicate on the WiFi and GPS bands.

However, in some instances, the cellular bands and the WiFi or GPS bands may overlap, causing interference when the cellular and GPS/WiFi antennas are in close proximity. Additionally, in relatively small devices, and particularly, in wearable communications devices such as watches, eyeglasses and virtual reality headsets, the antennas for similar frequency bands are allocated increasingly smaller space. For example, cellular antennas optimized for the 824-960 MHz and 1700-2700 MHz ranges require large volume to work efficiently. Such frequencies are close to, or overlap, the GPS and WiFi signals. The overlapping bands, combined with the proximity of the cellular antennas and GPS/WiFi antennas causes interference in the antennas. For example, transmission on a cellular antenna in the 1700 MHz band may cause interference with GPS signals in the 1575 MHz frequency band. Interference with such a signal is particularly problematic since the GPS signals are transmitted from satellites, resulting in weak and easily overpowered signals.

In many wearable devices, the electronics, including antennas for various communications services, are bundled into a singular systems module. The proximity of a user's body to the systems module that is inherent in a wearable device may result in the user's body absorbing or blocking parts of the signal transmitted by the antennas. Various systems and methods described herein provide for feeding multiple radiating elements of the antenna in wearable devices such as eyeglass display devices. A GPS/WiFi antenna may be provided within a system enclosure, for example, along the earpiece of the eyeglass display device, and one or more cellular antennas may be provided within the bridge and eyewires surrounding the eyeglass lenses. Routing the portions of the GPS/WiFi antenna on a different side of the wireless device from the cellular antenna improves the antenna efficiency and isolation of antennas that share the same or overlapping frequency bands. The cellular antenna may be provided with a feed point at various points in the eyeglass frames, permitting tuning of the radiation aperture for the cellular antennas. Additionally, multiple antennas and multi-band antennas may also be provided by tuning the distances that the cellular antennas extend around the eyeglass lenses.

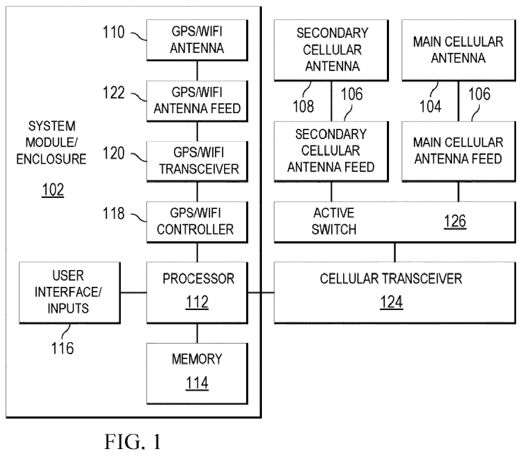

Fig. 1 is a block diagram illustrating components of an eyeglass display 100 according to some embodiments. The eyeglass display 100 comprises a processor 112, a memory 114, a user interface/user input 116 and a secondary interface such as a GPS/WiFi transceiver 120. These components of the eyeglass display 100 may form a system module or be disposed in a system enclosure 102 that is a housing, casing, enclosure or the like, that is, in various embodiments, conductive or non-conductive. The processor 112 may be any component capable of performing computations and/or other processing related tasks, and the memory 114 may be any component capable of storing programming and/or instructions for the processor 112. The user interface/inputs 116 that are connected to the processor 112 to permit a user to execute or interact with one or more programs or communications services running on the processor 112.

The eyeglass display 100 is configured to communicate over a cellular band, and over one or more secondary bands. The eyeglass display 100 has a cellular interface such as a cellular transceiver 124. The processor 112 in the system enclosure 102 is configured to transmit or receive signals through the main cellular antenna 104 or secondary cellular antenna 108 and cellular transceiver 124. In some embodiments, the cellular transceiver 124 is disposed outside of the system enclosure 102, and in other embodiments, the cellular transceiver 124 is housed within the system enclosure 102. The cellular transceiver 124 is connected to the main cellular antenna 104 by way of a first feed point 106, and in some embodiments, the cellular transceiver 124 is also connected to a second cellular antenna 108 by a second feed point 106. A switch 126 may be disposed between the cellular transceiver 124 and the cellular antennas 104, 108, and may be configured to switch the communication of the cellular transceiver 124 between the antennas 104, 108 based on a command from the processor or cellular transceiver 124. The cellular transceiver 124 may be any component or collection of components that allows the eyeglass display 100 to communicate using a cellular signal, and may be used to receive and/or transmit information over a cellular connection with a cellular network. In some embodiments, the cellular transceiver 124 may be formed as a single device, or alternatively, a separate receiver and transmitter.

The eyeglass display 100 further has a secondary interface such as a GPS/WiFi transceiver 120, with the GPS/WiFi transceiver 120 in electrical communication with a GPS/WiFi controller 118. The GPS/WiFi controller 118 and GPS/WiFi transceiver 120 may, in some embodiments, be a device such as a system-on-chip, add-on board or discrete component disposed in the system enclosure 102. In other embodiments, the GPS/WiFi controller 118 and GPS/WiFi transceiver 120 are integrated into a circuit board of the system enclosure 102, and in some embodiments, the processor 112 may execute portions of the GPS/WiFi communication management. In other embodiments, the secondary interface may be any component or collection of components that allows the device to communicate data or control information via a supplemental protocol. For instance, the secondary interface may be a non-cellular wireless interface for communicating in accordance with a Bluetooth, near field communication, wireless charging, or other wireless protocol.

The system enclosure 102 further has disposed therein one or more secondary antennas for providing communication capabilities for communications services using the secondary interface such as Bluetooth, GPS, WiFi, or the like. In some embodiments, the secondary antenna is a dual mode antenna configured to communicate, transmit and/or receive on multiple bands for multiple communications services. For example, the secondary antenna may be a GPS/WiFi antenna 110 that communicates or receives GPS positioning signals on a GPS frequency, set of frequencies or frequency band. Such a GPS/WiFi antenna may also be configured to transmit and receive WiFi signals on, for example, 2.4 GHz, 3.6 GHz or 5 GHz WiFi bands. The GPS/WiFi transceiver 120 may further be in signal communication with a GPS/WiFi antenna 110 through the GPS/WiFi antenna feed 122. The processor 112 is configured to transmit or receive signals through the GPS/WiFi antenna 110, GPS/WiFi controller 118 and GPS/WiFi transceiver 120.

A user may access the wireless communications services on the eyeglass display 100 and initiate a first communication by way of a first communication service that uses a first band. For example, initiating a telephone call, data request, or the like, may cause the eyeglass display 100 to transmit data over a cellular network using the cellular transceiver 124. Such a request causes the eyeglass display 100 to communicate on a first antenna such as the main cellular antenna 104 or secondary cellular antenna 108. A user may also initiate a second communication by way of a second communication service, such as WiFi or GPS. For example, a user may request a GPS location, which causes the processor 112 to receive a GPS location signal through the GPS/WiFi antenna 110 in response to the user action. The second communication uses a second band and causes the eyeglass display 100 to communicate on the second band using a second antenna. Additionally, a request using the first communication service may take place at the same time as using the second communication service. For example, a user may request a map over a cellular network, and also request that the system display the user's location on the map. Therefore, the user initiates the first communication for the map over the cellular network and initiates the second communication on the GPS band for receiving the GPS signal to determine the user's position for display on the map. In another example, a user may connect to a cellular network through the cellular transceiver 124 to engage in a telephone call, and may simultaneously connect to a WiFi network through the GPS/WiFi antenna 110 for data retrieval, web browsing, media access, or the like.

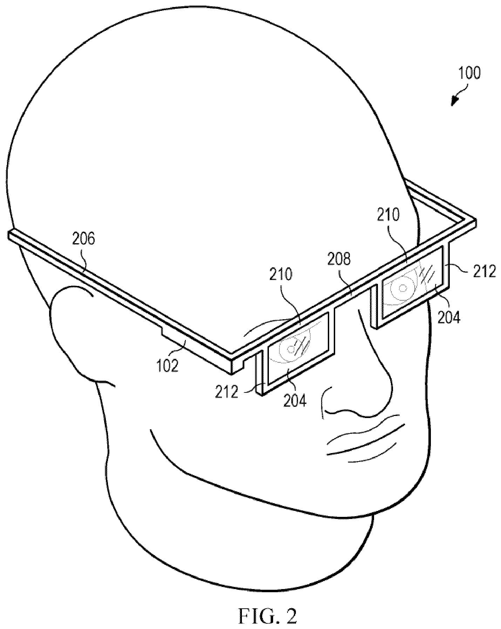

Fig. 2 is a diagram illustrating an eyeglass display 100 according to some embodiments. The eyeglass display 100 has earpieces 206 that extend along the side of a user's head, and retain the eyeglass display 100 by hooking over the ears of the user. The earpieces 206 are joined by upper eyewires 210 and a bridge 208 spanning the user's nose and separating the upper eyewires 210. In various embodiments, the earpieces 206 are conductive or non-conductive.

In some embodiments, the lenses 204 are retained against the upper eyewires 210 by lower eyewires 212, and in other embodiments, the lower eyewires 212 are omitted.

One or both of the earpieces 206 have a system enclosure 102 mounted thereon. In some embodiments, part of the user interface/input 116 in the system enclosure 102 has a display system that displays data to a user via a display surface disposed in an eye region. Thus, the eyeglass display 100 uses eyeglass frame that extends across the bridge of a user's nose to hold a display screen in in front a user's eye.

In some embodiments, the eyeglass display 100 has lenses 204 disposed in eye regions so that a user may use the lenses 204 as they would standard eyeglasses. The display screen may be such as a discrete display screen, or the lenses 204 may be used as a display screen. In some embodiments, the display system controls a transparent screen such as a liquid crystal display (LCD), light emitting diode (LED) display, or the like. In other embodiments, the display system has a projector that projects light into the interior surface of a display screen for viewing. In different embodiments, the display screen may be lenses 204, or may be a separate screen. For example, a display surface may be embedded in the lenses, formed on the surface of the lenses 204. Alternatively, in an embodiment where the display system uses a projector, the display system may project a data display to a user on the interior surface of the lenses 204. In other examples, a display screen separate from any lenses 204 is located in an eye region, and is used as a screen for a projector, or as an active display screen such as an LCD or LED screen. The separate display screen may, in some embodiment, eliminate the need for lenses. Thus, the eyeglass display 100 may be eyeglass frames with a display screen held in an eye region and the necessary components for providing the user interface and communications capabilities.

The user interface/input 116 also comprises, in some embodiments, a voice activated control system, but may also have a touch interface, gesture recognition interface, or a wireless interface such as a Bluetooth keyboard, mouse, joystick, gamepad, or the like.

The cellular transceiver 124 connects to, and communicates using, one or more cellular antennas 104, 108 that are disposed in one or both of the upper eyewires 210, and that are described in greater detail, below. Additionally, the cellular antennas 104, 108 may extend in the lower eyewires 212 around the lenses 204, providing a greater area for antenna layout and multiple paths for multiple conductive elements, permitting optimization of the antennas for multiple frequency bands.

In some embodiments, the GPS/WiFi antenna 110 (Fig. 1) is disposed within the system enclosure 102 along the earpiece 206. The earpiece 206 holds the GPS/WiFi antenna 110 apart from a user's head, reducing the specific absorption rate (SAR) and the amount of energy absorbed by the user's body.

Providing the cellular antennas 104, 108 in the upper and lower eyewires 210, 212 and providing the GPS/WiFi antenna 110 disposed on or along the earpieces 206 increases the separation between the GPS/WiFi antenna 110 and cellular antennas 104, 108 without increasing the volume required to enclose or support the antennas 104, 108, 110. The increased separation between the antennas 104, 108, 110 reduces the interference between antennas 104, 108, 110 by increasing the isolation of the radio frequency signals transmitted and received by the antennas 104, 108, 110. Additionally, the absorption of the RF signals by the user's body reduces the amount of radiation transmitted directly between the antennas, further increasing antenna isolation and reducing interference between antennas 104, 108, 110 transmitting on bands with overlapping or adjacent frequencies.

Thus, the eyeglass display 100 allows a user to access one or more communications services that communicate on the GPS/WiFi antenna 110 and one or more of the cellular antennas 104, 108 simultaneously with reduced interference and increase transmission efficiency. For example, the eyeglass display 100 may initiate or perform a first communication in response to a user command through the user interface and by way of a first communication service that uses a first antenna on a first RF band, such as the GPS/WiFi antenna 110. The eyeglass display 100 may also initiate or perform a second communication by way a second antenna on a second RF band such as one of the cellular antennas 104, 108. In such an example, the first and second communication may be completely, or partially simultaneous. Additionally, the first and/or second communication is not limited to being initiated by a user command, as either or both of the first and second communication may be initiated by the eyeglass display 100 automatically or without user intervention.

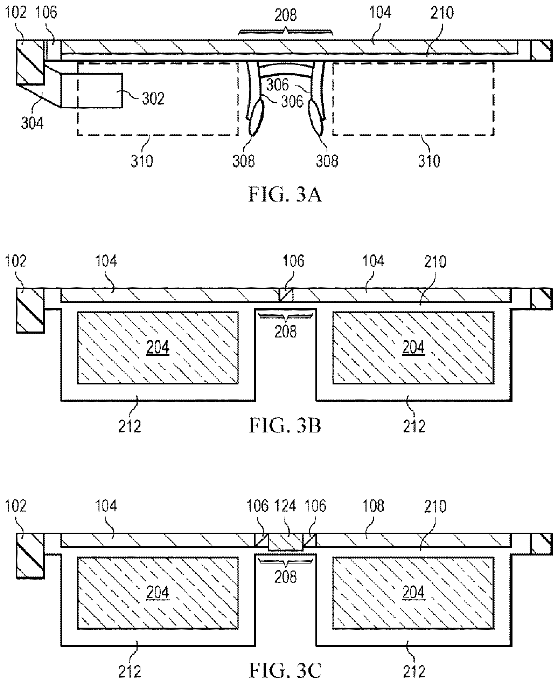

Figs. 3A through 3C are cross-sectional diagrams illustrating various arrangements of cellular antennas 104, 108 in the upper eyewires 210 and bridge 208 of the eyeglass display 100 according to some embodiments. One or more antenna portions may be disposed in the frames of the eyeglass display 100, and may be connected to the cellular transceiver 124 by one or more feed points 106 that are disposed in various places in the eyeglass display 100 frames.

Fig. 3A is a cross-sectional diagram illustrating a cellular antenna 104 in the upper eyewires 210 and bridge 208 of the eyeglass display 100 according to some embodiments. Additionally, the embodiment shown in Fig. 3A illustrates an eyeglass display frame without lenses. In such an embodiment, a display screen 302 is held, by a display support 304, in an eye region 310 of the eyeglass display. Nosepiece supports 306 and nosepads 308 replace the lower eyewire 212 and allow positioning of the eyeglass display 100 on a user's face. In an embodiment where the display screen 302 is an active display, the display screen may be electrically connected to the components in the system enclosure 102 so that the processor in the system module can display data to the user on the display screen. In an embodiment where a projector is used to display data on the display screen, the display screen 302 needs no electrical connection to the system module.

A feed point 106 is disposed at an end of, for example, the main cellular antenna 104. The main cellular antenna 104 is disposed within, or forms a part of, the frame of the eyeglass display 100 as discussed in greater detail below. The main cellular antenna 104, in an embodiment, extends from the feed point 106 at a temple, corner or hinge region of the eyeglass display 100 through a first upper eyewire 210, over a first eye region, through the bridge 208, and through a second eyewire 210 over a second eye region 310. While not explicitly shown, the eyeglass display frame may have a flexible region, hinge or other adjustment point in the temple area to permit adjustment, removal and increased comfort while a user wears the eyeglass display 100.

The feed point 106 may be connected to the active switch 126 (see Fig.1) if the eyeglass display 100 has additional cellular antennas, or may be connected directly to the cellular transceiver 124 (see Fig.1) in embodiments where the eyeglass display 100 has a single cellular antenna or where the cellular transceiver 124 does not switch between multiple cellular antennas. In some embodiments, the cellular transceiver 124 or active switch 126 may be disposed outside of the system enclosure 102, for example, embedded in the frame of the eyeglass display 124, with a wire or other connection connecting the cellular transceiver 124 and/or active switch 126 to components disposed in the system enclosure 102. In other embodiments, the cellular transceiver 124 or active switch 126 are disposed in the system enclosure 102, with a connection extending through the casing of the system enclosure 102 to the feed point 106, electrically connecting the main cellular antenna 104 to components in the system enclosure 102. In such embodiments, the connection from the feed point 106, cellular transceiver 124 or active switch 126 may be connected to the components in the system enclosure by a wire embedded in the eyeglass display frame. In some embodiments where the eyeglass display frame uses a flexible temple region, the connection may run through the temple region. In embodiments where the eyeglass display frame uses a hinge, a conductive hinge may be part of the connection, or a flexible wire connection may be used to bypass the hinge.

While the main cellular antenna 104 is shown in the illustrated embodiment extending completely across both eye regions 310, in other embodiments, the main cellular antenna 104 may extend laterally across just the first eye region 310 to terminate over the first eye region 310 or in the bridge 208 region, or may extend laterally over the first eye region 310, through the bridge 208 region and extend partially over the second eye region 310.

The embodiment shown herein without lenses is not limited to only omitting the lenses. Lenses and/or lower eyewires may be used in such an embodiment, and the separate display screen 302 may be included or omitted without deviating from the teachings of the embodiments.

Fig. 3B is a cross-sectional diagram illustrating a cellular antenna 104 in multiple parts connected to a feed point 106 according to some embodiments. In the illustrated embodiment, the display screen 302 is omitted for clarity and lenses 204 are shown to illustrate the various embodiments. A feed point 106 is disposed, for example, between two portions of the main cellular antenna 104. In such an embodiment, the feed point 106 may be disposed in the bridge 208 region of the eyeglass display 100. In other embodiments, the feed point 106 may be between, and connected to, more than two distinct main antenna 104 portions, or may be disposed in one of the upper eyewires 210 and connected to asymmetrical main antenna 104 portions.

Fig. 3C is a cross-sectional diagram illustrating multiple cellular antennas 104, 108 connected to multiple feed points according to some embodiments. Feed point 106 are each connected to separate antennas, and may, in some embodiments, be connected to a cellular transceiver 124 that is disposed in the frame of eyeglass display 100. Such an arrangement permits separate transmission over the main cellular antenna 104 and secondary cellular antenna 108, and the cellular transceiver 124 may include an active switch 126 (see Fig. 1).

The feed points 106 and cellular transceiver 124 may be disposed in the bridge 208 region of the eyeglass display 100. In other embodiments, one or both of the feed points 106 or the cellular transceiver 124 may be disposed in one of the upper eyewires 210 and the main cellular antenna 104 and secondary cellular antenna 108 may have different shapes. In other embodiments, the cellular transceiver 124 is disposed in the system enclosure 102, and is connected to the feed points 106 through discrete connections, such as, for example, wires separate from the main cellular antenna 104 and secondary cellular antenna 108.

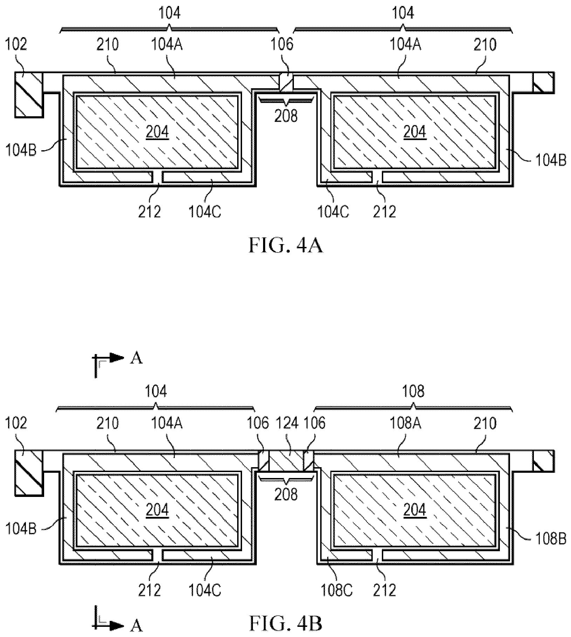

Figs. 4A through 4B are cross-sectional diagrams illustrating various arrangements of cellular antennas 104, 108 in the upper eyewires 210, bridge 208 and lower eyewires 212 of the eyeglass display 100 according to some embodiments. Each antenna 104, 108 may have one or more antenna portions extending into the lower eyewire 212, and may be connected to the cellular transceiver 124 by one or more feed points 106 that are disposed in various places in the eyeglass display 100 frames.

Fig. 4A is a cross-sectional diagram illustrating a cellular antenna 104 in multiple parts connected to a feed point 106 and with portions of the cellular antenna 104 extending into the lower eyewires 212 according to some embodiments. A feed point 106 is disposed, for example, between two portions of the main cellular antenna 104. In such an embodiment, the feed point 106 may be disposed in the bridge 208 region of the eyeglass display 100. In other embodiments, the feed point 106 may be between, and connected to, more than two distinct main antenna 104 portions, or may be disposed in one of the upper eyewires 210 and connected to asymmetrical main antenna 104 portions.

In the depicted embodiment, each portion of the main cellular antenna 104 has a first antenna portion 104A disposed in the upper eyewire 210 and extending over a respective lens 204. Second antenna portions 104B extend into the lower eyewire portions 212 from respective first antenna portions 104A along first edges of the lenses. In some embodiments, third antenna portions 104C extend into the lower eyewire portions 212 from respective first antenna portions 104A along second edges of the lenses 204 opposite the first edges. In some embodiments, first ends of the second antenna portions 104B and third antenna portions 104C are connected to the respective first antenna portions 104A, while the second the ends of the second antenna portions 104B are spaced apart from the second ends of the respective third antenna portions 104C, forming a discontinuous antenna around the lenses 204. Thus, the separate portions of the cellular main antenna 104 may be tuned for multi-mode operation, having antenna branches with different lengths that will resonate at different radio frequencies or in different RF bands. The embodiments described herein are not limited to having second or third antenna portions 104B, 104C that are symmetrical or the same on each side of the bridge 208. For example, a left portion of the main antenna 104 may have a second or third antenna portion 104B, 104C with a different length or layout than a second or third antenna portion 104B, 104C in the right portion of the main antenna 104.

Fig. 4B is a cross-sectional diagram illustrating multiple cellular antennas 104, 108 that extend into the lower eyewires 212 according to some embodiments. As described above, the cellular transceiver 124 may be disposed in the frame of the eyeglass display 100, for example, in the bridge 208 region. A main cellular antenna 104 and secondary cellular antenna 104 may each connect to individual feed points 106, permitting the cellular transceiver 124 or switch 126 (see Fig. 1) to switch between the cellular antennas 104, 108. The main cellular antenna 104 and secondary cellular antenna 108 each have respective first antenna portions 104A, 108A disposed in separate upper eyewires 210. Additionally, the main cellular antenna 104 and secondary cellular antenna 108 each have respective second antenna portions 104B, 108B and/or third antenna portions 104C, 108C extending into the lower eyewires 212, as described above.

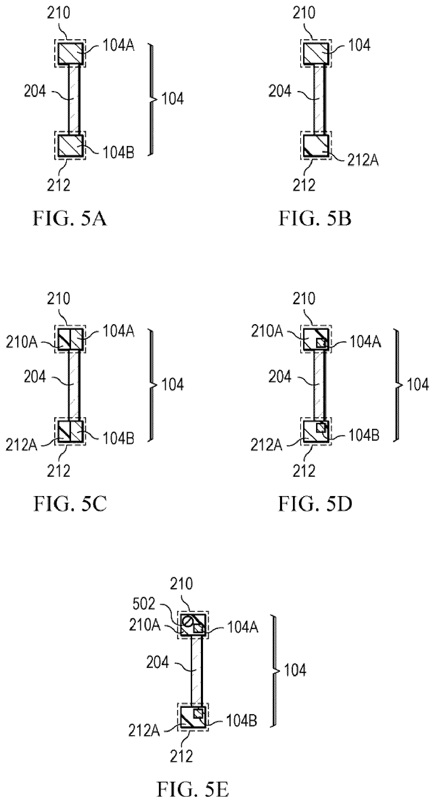

Figs. 5A through 5E are cross-sectional diagrams of embodiments from Figs. 3A through 4B, taken along plane AA as shown in Fig. 4B, and illustrating various arrangements of cellular antennas 104 in the eyeglass display 100 according to some embodiments. Fig. 5A is a cross-sectional diagram illustrating the upper and lower eyewires 210, 212 comprising the first and second antenna portions 104A, 104B according to an embodiment. In some embodiments, the material of the eyewires 210, 212 is a conductive material and forms the main cellular antenna 104. Thus, the antenna portions 104A, 104B comprise substantially all of the eyewire 210, 212 cross-sections. In embodiments where one or more of the antennas 104, 108 has a second or third antenna portion 104B, 104C that extends under the lens 204, the lower eyewire 212 forms second or third antenna portion 104B, 104C

In some embodiments, the antenna 104 is formed by casting, molding or machining a metal or other conductive material to form the frame of the eyeglass display 100, including the upper eyewires 210. In some embodiments where the antenna 104 extends into the lower eyewire 212, the lower eyewire 212 may be formed from the same material, and at the same time as the upper eyewire 210, or as a separate piece that is joined or attached to the upper eyewire 210. In some embodiments, a nonconductive coating such as an epoxy, lacquer, enamel, paint, anodized coating, dielectric or the like is applied to the surface of eyewires 210, 212 forming the antenna 104 to electrically insulate the antenna 104 from the surface of the user's skin. Such a nonconductive coating may also be used to house or support the cellular transceiver 124, active switch 126 or hinge region for the earpiece 206 (see Fig. 1) or to fill spaces between the second and third antenna portions 104B, 104C.

Fig. 5B is a cross-sectional diagram illustrating the upper and lower eyewires 210, 212 with the antenna 104 disposed in the upper eyewire 210 according to an embodiment. Such an arrangement is used, for example, in the embodiments shown in Figs. 3A through 3C, where the main cellular antenna 104 avoids the lower eyewire 212. In such an embodiment, the upper eyewire 210 forms the antenna, as described above. The lower eyewire 212 comprises a lower support portion 212A that is electrically insulated from the antenna 104. In some embodiments, the lower support portion 212A is a polymer such as an epoxy, a plastic or the like that is molded, machined, thermoformed or otherwise formed to hold or accept the lens 204. In an alternative embodiment, the lower support portion 212A/lower eyewire 212 or the lenses 204 is omitted (see, e.g., Fig. 3A), as they is not needed to provide or enclose portions of the antenna 104.

Fig. 5C is a cross-sectional diagram illustrating the upper and lower eyewires 210, 212 with the antenna 104 disposed in the upper and lower eyewires 210, 212 according to an embodiment. In such an embodiment, the antenna 104 may form a portion of the surface of the upper and lower eyewires 210, 212. Upper and lower support portions 210A, 212A are attached to the first and second antenna portions 104A, 104B, respectively. In some embodiments, the upper and lower support portions 210A, 212A may be used to bond the lenses 204 to the antenna 104, and to provide support for hinges or components.

Fig. 5D is a cross-sectional diagram illustrating the upper and lower eyewires 210, 212 with the antenna 104 embedded in the upper and lower eyewires 210, 212 according to an embodiment. In such an embodiment, the antenna 104 is embedded in the upper and/or lower support portions 210A, 212A of the respective upper and lower eyewires 210, 212, with the support portions 210A, 212A forming the surfaces of the eyewires 210, 212. The upper and lower eyewires 210, 212 may be formed by molding or casting the respective support portion 210A, 212A around the antenna 104.

Fig. 5E is a cross-sectional diagram illustrating the upper and lower eyewires 210, 212 with the antenna 104 and additional wiring 502 embedded in the upper eyewire 210 according to an embodiment. In embodiments where a feed point 106, switch 126, or cellular transceiver 124 are disposed in the eyewires 210, 212 remote from the system enclosure 102, it may be necessary to provide signal communication from the system enclosure 102 to the relevant component. Wiring 502 connecting various components may be disposed or embedded in the upper eyewire 210, and be electrically insulated from the antenna 104.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. An eyeglass display device (100) comprising:
a processor (112) disposed in a system enclosure;
a display system connected to the processor and configured to display data to a user via a display screen in an eye region;
a first antenna disposed in the system enclosure (102) and operably connected to the processor (112), and wherein the processor is configured to cause the first antenna to transmit on a first radio frequency (RF) band; and
a second antenna disposed outside the system enclosure (102) and operably connected to the processor (112), wherein the processor is configured to cause the second antenna to transmit on a second RF band;
a cellular transceiver (124) disposed outside of the system enclosure (102) and connected to a main cellular antenna (104) by a first feed point (106) and connected to a second cellular antenna (108) by a second feed point (106), wherein a switch (126) is disposed between the cellular transceiver (124) and the cellular antennas (104, 108) and configured to switch the communication of the cellular transceiver (124) between the cellular antennas (104, 108) based on a command from the processor (112); the second antenna is the main cellular antenna (104) or the second cellular antenna (108);
wherein the second antenna extends laterally along a first edge of the at least one eye region and the first edge is an upper eyewire (210);
wherein the first antenna is used to perform at least part of a first communication in response to first commands from the processor (112);
wherein the second antenna is used to perform at least part of a second communication in response to second commands from the processor (112).

2. The eyeglass display device (100) of Claim 1, wherein the first RF band (110) comprises a GPS frequency and one or more wireless networking (WiFi) frequency bands;
wherein the second RF band comprises one or more cellular frequency bands (104, 108); and
wherein the processor (112) is configured to simultaneously cause the first antenna to transmit on the first RF band and cause the second antenna to transmit on the second RF band.

3. The eyeglass display device (100) of Claim 1, wherein the system enclosure (102) is disposed on an earpiece (206), and wherein the first antenna extends along the earpiece.

4. The eyeglass display device of Claim 1, wherein the second antenna is disposed in an upper eyewire (210) and extends over two eye regions.

5. The eyeglass display device (100) of Claim 4, wherein the second antenna comprises first antenna portions each connected to the processor (112) of a feed point (106) disposed between the two eye regions, and wherein each of the first antenna portions extend over a respective eye region of the two eye regions.

6. The eyeglass display device of Claim 5, further comprising two eyeglass lenses (204) each disposed in a respective one of the two eye regions (310);
wherein the second antenna further comprises second antenna portions each extending from respective ones of the first antenna portions and along second edges of the two eyeglass lenses.

7. The eyeglass display device of Claim 6, wherein each of the second antenna portions has a length different from other ones of the second antenna portions.

8. A method comprising:
providing a user interface by an eyeglass display device (100) and on a display screen disposed in an eye region (310) of the eyeglass display device, the eyeglass display device having a processor (112) and a first antenna disposed in a system enclosure (102), the eyeglass display further having a second antenna disposed outside of the system enclosure and extending laterally along a first edge of the at least one eye region and the first edge is an upper eyewire (210); the eyeglass display further having a cellular transceiver (124) disposed outside of the system enclosure (102) and connected to a main cellular antenna (104) by a first feed point (106) and connected to a second cellular antenna (108) by a second feed point (106), wherein a switch (126) is disposed between the cellular transceiver (124) and the cellular antennas (104, 108) and configured to switch the communication of the cellular transceiver (124) between the cellular antennas (104, 108) based on a command from the processor (112); the second antenna is the main cellular antenna (104) or the second cellular antenna (108); wherein the first antenna is configured to communicate in a first radio frequency (RF) band, wherein the second antenna is configured to communicate in a second RF band;
performing at least part of a first communication using the first antenna in response to first commands from the processor; and
performing at least part of a second communication using the second antenna in response to second commands from the processor.

## Patentansprüche

1. Brillenanzeigegerät (100), das Folgendes umfasst:
einen Prozessor (112), der in einer Systemumhüllung platziert ist;
ein Anzeigesystem, das mit dem Prozessor verbunden und konfiguriert ist, einem Benutzer Daten über einen Bildschirm in einem Augenbereich anzuzeigen;
eine erste Antenne, die in der Systemumhüllung (102) platziert und mit dem Prozessor (112) betriebsfähig verbunden ist, und wobei der Prozessor konfiguriert ist, zu bewirken, dass die erste Antenne in einem ersten Hochfrequenzband (HF-Band) sendet; und
eine zweite Antenne, die außerhalb der Systemumhüllung (102) platziert und mit dem Prozessor (112) betriebsfähig verbunden ist, wobei der Prozessor konfiguriert ist, zu bewirken, dass die zweite Antenne in einem zweiten HF-Band sendet;
einen Mobilfunktransceiver (124), der außerhalb der Systemumhüllung (102) platziert und über einen ersten Speisepunkt (106) mit einer Hauptmobilfunkantenne (104) verbunden ist und über einen zweiten Speisepunkt (106) mit einer zweiten Mobilfunkantenne (108) verbunden ist, wobei zwischen dem Mobilfunktransceiver (124) und den Mobilfunkantennen (104, 108) ein "Switch" (126) platziert und konfiguriert ist, die Kommunikation des Mobilfunktransceivers (124) zwischen den Mobilfunkantennen (104, 108) basierend auf einem Befehl vom Prozessor (112) zu schalten; wobei es sich bei der zweiten Antenne um die Hauptmobilfunkantenne (104) oder die zweite Mobilfunkantenne (108) handelt;
wobei sich die zweite Antenne quer entlang einer ersten Kante des mindestens einen Augenbereichs erstreckt und die erste Kante ein oberer Augenrand (210) ist;
wobei die erste Antenne dazu verwendet wird, mindestens einen Teil einer ersten Kommunikation als Reaktion auf erste Befehle vom Prozessor (112) durchzuführen;
wobei die zweite Antenne dazu verwendet wird, mindestens einen Teil einer zweiten Kommunikation als Reaktion auf zweite Befehle vom Prozessor (112) durchzuführen.

2. Brillenanzeigegerät (100) nach Anspruch 1, wobei das erste HF-Band (110) eine GPS-Frequenz und ein oder mehrere für eine drahtlose Vernetzung (WiFi) vorgesehene Frequenzbänder umfasst;
wobei das zweite HF-Band ein oder mehrere Mobilfunkfrequenzbänder (104, 108) umfasst; und
wobei der Prozessor (112) konfiguriert ist, zu bewirken, dass die erste Antenne im ersten HF-Band sendet, und gleichzeitig zu bewirken, dass die zweite Antenne im zweiten HF-Band sendet.

3. Brillenanzeigegerät (100) nach Anspruch 1, wobei die Systemumhüllung (102) auf einem Bügelendstück (206) platziert ist und wobei sich die erste Antenne entlang des Bügelendstücks erstreckt.

4. Brillenanzeigegerät nach Anspruch 1, wobei die zweite Antenne in einem oberen Augenrand (210) platziert ist und sich über zwei Augenbereiche erstreckt.

5. Brillenanzeigegerät (100) nach Anspruch 4, wobei die zweite Antenne erste Antennenabschnitte, die jeweils mit dem Prozessor (112) eines zwischen den zwei Augenbereichen platzierten Speisepunkts (106) verbunden sind, umfasst und wobei sich jeder der ersten Antennenabschnitte über einen jeweiligen Augenbereich der zwei Augenbereiche erstreckt.

6. Brillenanzeigegerät nach Anspruch 5, das ferner zwei Brillengläser (204), die jeweils in einem jeweiligen der zwei Augenbereiche (310) platziert sind, umfasst;
wobei die zweite Antenne ferner zweite Antennenabschnitte, die sich jeweils von jeweiligen der ersten Antennenabschnitte und entlang zweiter Kanten der zwei Brillengläser erstrecken, umfasst.

7. Brillenanzeigegerät nach Anspruch 6, wobei jeder der zweiten Antennenabschnitte eine andere Länge als andere der zweiten Antennenabschnitte aufweist.

8. Verfahren, das Folgendes umfasst:
Bereitstellen einer Benutzeroberfläche durch ein Brillenanzeigegerät (100) auf einem in einem Augenbereich (310) des Brillenanzeigegeräts platzierten Bildschirm, wobei das Brillenanzeigegerät einen Prozessor (112) und eine erste Antenne, die in einer Systemumhüllung (102) platziert sind, aufweist, wobei die Brillenanzeige ferner eine zweite Antenne, die außerhalb der Systemumhüllung platziert ist und sich quer entlang einer ersten Kante des mindestens einen Augenbereichs erstreckt, aufweist und die erste Kante ein oberer Augenrand (210) ist; wobei die Brillenanzeige ferner einen Mobilfunktransceiver (124), der außerhalb der Systemumhüllung (102) platziert und über einen ersten Speisepunkt (106) mit einer Hauptmobilfunkantenne (104) verbunden ist und über einen zweiten Speisepunkt (106) mit einer zweiten Mobilfunkantenne (108) verbunden ist, aufweist, wobei zwischen dem Mobilfunktransceiver (124) und den Mobilfunkantennen (104, 108) ein "Switch" (126) platziert und konfiguriert ist, die Kommunikation des Mobilfunktransceivers (124) zwischen den Mobilfunkantennen (104, 108) basierend auf einem Befehl vom Prozessor (112) zu schalten; wobei es sich bei der zweiten Antenne um die Hauptmobilfunkantenne (104) oder die zweite Mobilfunkantenne (108) handelt;
wobei die erste Antenne konfiguriert ist, in einem ersten Hochfrequenzband (HF-Band) zu kommunizieren, wobei die zweite Antenne konfiguriert ist, in einem zweiten HF-Band zu kommunizieren;
Durchführen mindestens eines Teils einer ersten Kommunikation unter Verwendung der ersten Antenne als Reaktion auf erste Befehle vom Prozessor; und
Durchführen mindestens eines Teils einer zweiten Kommunikation unter Verwendung der zweiten Antenne als Reaktion auf zweite Befehle vom Prozessor.

## Revendications

1. Dispositif d'affichage de lunettes (100) comprenant :
un processeur (112) disposé dans une enceinte de système ;
un système d'affichage connecté au processeur et configuré pour afficher des données à un utilisateur via un écran d'affichage dans une région oculaire ;
une première antenne disposée dans l'enceinte de système (102) et connectée de façon fonctionnelle au processeur (112), et le processeur étant configuré pour amener la première antenne à transmettre sur une première bande de radiofréquences (RF) ; et
une deuxième antenne disposée à l'extérieur de l'enceinte de système (102) et connectée de façon fonctionnelle au processeur (112), le processeur étant configuré pour amener la deuxième antenne à transmettre sur une deuxième bande RF ;
un émetteur-récepteur cellulaire (124) disposé à l'extérieur de l'enceinte de système (102) et connecté à une antenne cellulaire principale (104) par un premier point d'alimentation (106) et connecté à une deuxième antenne cellulaire (108) par un deuxième point d'alimentation (106), un commutateur (126) étant disposé entre l'émetteur-récepteur cellulaire (124) et les antennes cellulaires (104, 108) et configuré pour commuter la communication de l'émetteur-récepteur cellulaire (124) entre les antennes cellulaires (104, 108) sur la base d'une commande provenant du processeur (112) ; la deuxième antenne est l'antenne cellulaire principale (104) ou la deuxième antenne cellulaire (108) ;
la deuxième antenne s'étendant latéralement le long d'un premier bord de l'au moins une région oculaire et le premier bord étant un fil oculaire supérieur (210) ;
la première antenne étant utilisée pour réaliser au moins une partie d'une première communication en réponse à des premières commandes provenant du processeur (112) ;
la deuxième antenne étant utilisée pour réaliser au moins une partie d'une deuxième communication en réponse à des deuxièmes commandes provenant du processeur (112).

2. Dispositif d'affichage de lunettes (100) selon la revendication 1, dans lequel la première bande RF (110) comprend une fréquence GPS et une ou plusieurs bandes de fréquences de réseautage sans fil (WiFi) ;
la deuxième bande RF comprenant une ou plusieurs bandes de fréquences cellulaires (104, 108) ; et
le processeur (112) étant configuré pour amener simultanément la première antenne à transmettre sur la première bande RF et amener la deuxième antenne à transmettre sur la deuxième bande RF.

3. Dispositif d'affichage de lunettes (100) selon la revendication 1, dans lequel l'enceinte de système (102) est disposée sur un écouteur (206), et dans lequel la première antenne s'étend le long de l'écouteur.

4. Dispositif d'affichage de lunettes selon la revendication 1, dans lequel la deuxième antenne est disposée dans un fil oculaire supérieur (210) et s'étend sur deux régions oculaires.

5. Dispositif d'affichage de lunettes (100) selon la revendication 4, dans lequel la deuxième antenne comprend des premières portions d'antenne connectées chacune au processeur (112) d'un point d'alimentation (106) disposé entre les deux régions oculaires, et chacune des premières portions d'antenne s'étendant sur une région oculaire respective des deux régions oculaires.

6. Dispositif d'affichage de lunettes selon la revendication 5, comprenant en outre deux verres de lunettes (204) disposés chacun dans une région respective des deux régions oculaires (310) ;
la deuxième antenne comprenant en outre des deuxièmes portions d'antenne s'étendant chacune à partir de portions d'antenne respectives parmi les premières portions d'antenne et le long de deuxièmes bords des deux verres de lunettes.

7. Dispositif d'affichage de lunettes selon la revendication 6, dans lequel chacune des deuxièmes portions d'antenne a une longueur différente des autres portions d'antenne parmi les deuxièmes portions d'antenne.

8. Procédé comprenant :
la fourniture d'une interface utilisateur par un dispositif d'affichage de lunettes (100) et sur un écran d'affichage disposé dans une région oculaire (310) du dispositif d'affichage de lunettes, le dispositif d'affichage de lunettes ayant un processeur (112) et une première antenne disposée dans une enceinte de système (102), le dispositif d'affichage de lunettes ayant en outre une deuxième antenne disposée à l'extérieur de l'enceinte de système et s'étendant latéralement le long d'un premier bord de l'au moins une région oculaire et le premier bord étant un fil oculaire supérieur (210) ; le dispositif d'affichage de lunettes ayant en outre un émetteur-récepteur cellulaire (124) disposé à l'extérieur de l'enceinte de système (102) et connecté à une antenne cellulaire principale (104) par un premier point d'alimentation (106) et connecté à une deuxième antenne cellulaire (108) par un deuxième point d'alimentation (106), un commutateur (126) étant disposé entre l'émetteur-récepteur cellulaire (124) et les antennes cellulaires (104, 108) et configuré pour commuter la communication de l'émetteur-récepteur cellulaire (124) entre les antennes cellulaires (104, 108) sur la base d'une commande provenant du processeur (112); la deuxième antenne étant l'antenne cellulaire principale (104) ou la deuxième antenne cellulaire (108) ; la première antenne étant configurée pour communiquer dans une première bande de radiofréquences (RF), la deuxième antenne étant configurée pour communiquer dans une deuxième bande RF ;
la réalisation d'au moins une partie d'une première communication à l'aide de la première antenne en réponse à des premières commandes provenant du processeur ; et
la réalisation d'au moins une partie d'une deuxième communication à l'aide de la deuxième antenne en réponse à des deuxième commandes provenant du processeur.
